# EUROPÄISCHE PATENTANMELDUNG

(11) **EP 2 993 535 A1**
(43) Veröffentlichungstag der Anmeldung: **09.03.2016**
(21) Anmeldenummer: 14003098.2
(22) Anmeldetag: 08.09.2014
(51) Int. Cl.: G05B 9/02, G05B 19/042, G05B 19/05, H04L 1/22, G08B 25/12

(54) **Verfahren zur Überwachung der Funktionsfähigkeit eines Gerätesystems**

(71) Anmelder: Hilti Aktiengesellschaft, 9494 Schaan (LI)
(72) Erfinder: Kaneider, Wilfried, AT-6830 Rankweil (AT)
(74) Vertreter: Hilti Aktiengesellschaft Corporate Intellectual Property

(57) **Zusammenfassung**

Verfahren zur Überwachung der Funktionsfähigkeit eines Gerätesystems mit einem Werkzeuggerät (12) und einer Fernbedienung (13) während des Betriebes, mit den Schritten:
▪ ein sicherheitsrelevantes Steuersignal (41) wird von einem Steuerelement (35) der Fernbedienung (13) an eine erste Kontrolleinheit (34) der Fernbedienung (13) gesandt,
▪ das Steuersignal (41) wird von der ersten Kontrolleinheit (34) zusammen mit einem Sicherheitscode (SC) in einem Datenpaket (42) angeordnet und über eine Kommunikationsverbindung (36, 37) von der ersten Kontrolleinheit (34) an eine zweite Kontrolleinheit (28) des Werkzeuggerätes (12) übertragen,
▪ der übertragene Sicherheitscode (43) wird von der zweiten Kontrolleinheit (28) aus dem Datenpaket (42) entnommen und auf Aufforderung einer Überwachungseinheit (44) an die Überwachungseinheit (44) weitergeleitet,
▪ der übertragene Sicherheitscode (43) wird von der Überwachungseinheit (44) mit einem Vergleichscode (VC) verglichen und
▪ das Werkzeuggerät (12) wird von der Überwachungseinheit (44) in einen sicheren Zustand geschaltet, wenn der übertragene Sicherheitscode (43) vom Vergleichscode (VC) abweicht.

## Beschreibung

### Technisches Gebiet

Die vorliegende Erfindung betrifft ein Verfahren zur Überwachung der Funktionsfähigkeit eines Gerätesystems während des Betriebes gemäß dem Oberbegriff des Anspruchs 1 sowie ein Gerätesystem zur Durchführung eines derartigen Verfahrens gemäß dem Oberbegriff des Anspruchs 10.

### Stand der Technik

Gerätesysteme mit einer motorischen Vorschubeinheit müssen nach der Maschinenrichtlinie einen Not-Aus-Schalter aufweisen, um das Werkzeuggerät bei einer Störung innerhalb einer vorgeschriebenen Zeitdauer in einen sicheren Zustand zu überführen. Die Bedienung von Gerätesystemen mit einer motorischen Vorschubeinheit wird immer häufiger über Fernbedienungen durchgeführt. Dabei erfolgen die Übertragung von Steuersignalen und Daten zwischen der Fernbedienung und dem Werkzeuggerät über draht- und kabelgebundene Kommunikationsverbindungen, die als Kommunikationskabel bezeichnet werden, oder über draht- und kabellose Kommunikationsverbindungen, wie beispielsweise über Funkverbindungen. Bei Gerätesystemen, die eine draht- und kabellose Kommunikation erlauben, sind auch Kabelanschlüsse für ein Kommunikationskabel vorgesehen, da eine draht- und kabellose Kommunikation in bestimmten Bereichen, wie z.B. im Flughafen oder Krankenhaus, nicht erlaubt ist.

Die Maschinenrichtlinie fordert für die Übertragung von sicherheitsrelevanten Steuersignalen, wie von einem Not-Aus-Schalter, eine hohe Zuverlässigkeit, die im Rahmen der Gerätezulassung vom Gerätehersteller nachzuweisen ist. Bei der Verwendung von bewährten Bauteilen, für die die Einhaltung von Sicherheitsstandards nachgewiesen wurde, ist kein zusätzlicher Nachweis erforderlich. Daher weisen beispielsweise spezielle Kommunikationskabel für Gerätesysteme mit einer motorischen Vorschubeinheit neben einer oder mehreren Datenleitungen eine zertifizierte Steuerleitung für die Übertragung des Not-Aus-Steuersignals auf.

### Darstellung der Erfindung

Die Aufgabe der vorliegenden Erfindung besteht darin, bei einem Gerätesystem mit einem Werkzeuggerät und einer Fernbedienung, die über eine draht- und kabellose Kommunikationsverbindung oder über ein Kommunikationskabel ohne zertifizierte Steuerleitung verbindbar sind, die von der Maschinenrichtlinie geforderte Funktionssicherheit einzuhalten.

Diese Aufgabe wird bei dem eingangs genannten Verfahren zur Überwachung der Funktionsfähigkeit eines Gerätesystems während des Betriebes erfindungsgemäß durch die Merkmale des unabhängigen Anspruchs 1 gelöst und bei dem Gerätesystem zur Durchführung eines derartigen Verfahrens durch die Merkmale des unabhängigen Anspruchs 10. Vorteilhafte Weiterbildungen sind in den abhängigen Ansprüchen angegeben.

Erfindungsgemäß weist das Verfahren zur Überwachung der Funktionsfähigkeit eines Gerätesystems während des Betriebes die Schritte auf:
▪ ein sicherheitsrelevantes Steuersignal wird von einem Steuerelement der Fernbedienung an eine erste Kontrolleinheit der Fernbedienung gesandt,
▪ das Steuersignal wird von der ersten Kontrolleinheit zusammen mit einem Sicherheitscode in einem Datenpaket angeordnet und über eine Kommunikationsverbindung von der ersten Kontrolleinheit an eine zweite Kontrolleinheit des Werkzeuggerätes übertragen,
▪ der übertragene Sicherheitscode wird von der zweiten Kontrolleinheit aus dem Datenpaket entnommen und auf Aufforderung einer Überwachungseinheit an die Überwachungseinheit weitergeleitet,
▪ der übertragene Sicherheitscode wird von der Überwachungseinheit mit einem Vergleichscode verglichen und
▪ das Werkzeuggerät wird von der Überwachungseinheit in einen sicheren Zustand geschaltet, wenn der übertragene Sicherheitscode vom Vergleichscode abweicht.

Der Vorteil des erfindungsgemäßen Verfahrens zur Überwachung der Funktionsfähigkeit eines Gerätesystems während des Betriebes besteht darin, dass die Funktionssicherheit mit Hilfe von Hardwarekomponenten realisiert wird und keine Zertifizierung einer Software erforderlich ist. Das Werkzeuggerät wird von der Überwachungseinheit in einen sicheren Zustand geschaltet, wenn der übertragene Sicherheitscode vom Vergleichscode abweicht, wobei die Ursache der Störung keine Rolle spielt. Mögliche Ursachen können Störungen in der ersten Kontrolleinheit sein, die den Sicherheitscode fehlerhaft oder unvollständig im Datenpaket speichert, Störungen der Kommunikationsverbindung, die den Sicherheitscode verändert oder nicht überträgt, oder Störungen in der zweiten Kontrolleinheit, die den Sicherheitscode verändert oder nicht an die Überwachungseinheit überträgt. Über die Länge des Sicherheitscodes, der in der ersten Kontrolleinheit gespeichert wird, kann die Funktionssicherheit eingestellt werden; je länger der Sicherheitscode ist, umso höher ist die Funktionssicherheit. Bevorzugt wird von der Überwachungseinheit mit einer voreingestellten Frequenz eine Aufforderung an die zweite Kontrolleinheit übermittelt, den übertragenen Sicherheitscode an die Überwachungseinheit weiterzuleiten. Die Überwachungseinheit ist die steuernde Komponente bei der Überwachung. Der an die zweite Kontrolleinheit übertragene Sicherheitscode wird erst nach Aufforderung von der zweiten Kontrolleinheit an die Überwachungseinheit weitergeleitet. Die zweite Kontrolleinheit hat lediglich die Aufgabe, den übertragenen Sicherheitscode weiterzuleiten, es findet weder eine Verarbeitung noch eine Speicherung durch die zweite Kontrolleinheit statt.

Besonders bevorzugt wird das Werkzeuggerät von der Überwachungseinheit in einen sicheren Zustand geschaltet, wenn der übertragene Sicherheitscode nicht innerhalb einer voreingestellten Zeitdauer nach der Aufforderung vollständig an die Überwachungseinheit weitergeleitet wurde. Neben der Zeichenfolge des Sicherheitscodes ist die Zeit, die die Übertragung in Anspruch nimmt, eine wichtige Einflussgröße für die Funktionssicherheit. Das Werkzeuggerät kann bei betätigtem Not-Aus-Schalter nur dann innerhalb der vorgegebenen Zeitspanne in einen sicheren Zustand gebracht werden, wenn die Übertragungszeiten kurz genug sind.

In einer bevorzugten Weiterentwicklung des Verfahrens werden die Steuersignale von der ersten Kontrolleinheit zusammen mit einem ersten Sicherheitscode und einem zweiten Sicherheitscode im Datenpaket angeordnet und über die Kommunikationsverbindung an die zweite Kontrolleinheit übertragen. Die Funktionssicherheit des Gerätesystems kann durch die Verwendung redundanter Systeme erhöht werden. Durch die Verwendung von zwei unabhängigen Sicherheitscodes wird die Funktionssicherheit erhöht. Wenn der erste und zweite Sicherheitscode in verschiedenen Bereichen der Fernbedienung gespeichert werden, kann das Risiko verringert werden, dass beide Speicherelemente für die Sicherheitscode der gleichen Störung unterliegen.

Redundanz bezeichnet das Vorhandensein funktional gleicher oder vergleichbarer Ressourcen eines technischen Systems, wobei diese bei einem störungsfreien Betrieb nicht benötigt werden. Ressourcen können beispielsweise redundante Informationen, Motoren, Baugruppen, komplette Geräte, Steuerleitungen und Leistungsreserven sein. In der Regel dienen diese zusätzlichen Ressourcen zur Erhöhung der Ausfallsicherheit, der Funktionssicherheit und der Betriebssicherheit.

Bevorzugt werden die übertragenen ersten und zweiten Sicherheitscodes von der zweiten Kontrolleinheit aus dem Datenpaket entnommen und der übertragene erste Sicherheitscode wird auf Aufforderung einer ersten Überwachungseinheit an die erste Überwachungseinheit und der übertragene zweite Sicherheitscode wird auf Aufforderung einer zweiten Überwachungseinheit an die zweite Überwachungseinheit weitergeleitet. Dabei wird der erste Sicherheitscode von der ersten Überwachungseinheit mit einem ersten Vergleichscode verglichen und der zweite Sicherheitscode wird von der zweiten Überwachungseinheit mit einem zweiten Vergleichscode verglichen. Die Funktionsfähigkeit des Gerätesystems wird unabhängig voneinander zweifach geprüft. Der erste Sicherheitscode wird von einer ersten Überwachungseinheit geprüft und der zweite Sicherheitscode von einer zweiten Überwachungseinheit. Die Überwachungseinheiten vergleichen die Zeichenfolge des übertragenen Sicherheitscodes mit dem gespeicherten Vergleichscode.

Das Werkzeuggerät wird von der ersten und/oder zweiten Überwachungseinheit in einen sicheren Zustand geschaltet, wenn der übertragene erste Sicherheitscode vom ersten Vergleichscode abweicht und/oder der übertragene zweite Sicherheitscode vom zweiten Vergleichscode abweicht. Sobald eine der beiden Überwachungseinheiten eine Abweichung zwischen dem übertragenen Sicherheitscode und dem Vergleichscode feststellt, wird das Werkzeuggerät in einen sicheren Zustand gebracht. Das Werkzeuggerät wird nur dann weiter betrieben, wenn beide Überwachungseinheiten keine Abweichung feststellen.

In einer Weiterentwicklung übermittelt die erste Überwachungseinheit mit einer ersten Frequenz eine erste Aufforderung an die zweite Kontrolleinheit, den übertragenen ersten Sicherheitscode an die erste Überwachungseinheit weiterzuleiten, und die zweite Überwachungseinheit übermittelt mit einer zweiten Frequenz eine zweite Aufforderung an die zweite Kontrolleinheit, den übertragenen zweiten Sicherheitscode an die zweite Überwachungseinheit weiterzuleiten. Das Werkzeuggerät wird von der ersten und/oder zweiten Überwachungseinheit in einen sicheren Zustand geschaltet, wenn der übertragene erste Sicherheitscode nicht innerhalb einer voreingestellten ersten Zeitdauer nach der Aufforderung vollständig an die erste Überwachungseinheit weitergeleitet wurde und der übertragene zweite Sicherheitscode nicht innerhalb einer voreingestellten zweiten Zeitdauer nach der Aufforderung vollständig an die zweite Überwachungseinheit weitergeleitet wurde.

Neben der Zeichenfolge der Sicherheitscodes ist die Zeit, die die Übertragung in Anspruch nimmt, eine wichtige Einflussgröße für die Funktionssicherheit. Das Werkzeuggerät wird von der ersten und/oder zweiten Überwachungseinheit in einen sicheren Zustand gebracht, wenn die übertragenen Sicherheitscodes nicht innerhalb einer Zeitdauer nach der Aufforderung vollständig an die Überwachungseinheiten weitergeleitet wurden. Die Frequenzen, mit denen die Überwachungseinheiten eine Aufforderung an die zweite Kontrolleinheit senden können sich voneinander unterscheiden, ebenso wie die Zeitdauern, innerhalb der die übertragenen Sicherheitscodes an die Überwachungseinheiten weitergeleitet werden müssen. Das Werkzeuggerät wird nur dann weiter betrieben, wenn bei beiden Überwachungseinheiten innerhalb der voreingestellten Zeitdauern die übertragenen Sicherheitscodes vollständig und fehlerlos weitergeleitet wurden.

Zur Durchführung des erfindungsgemäßen Verfahrens umfasst das Gerätesystem eine Überwachungseinheit, die die Funktionssicherheit des Gerätesystems während des Betriebes überwacht. Erfindungsgemäß ist vorgesehen, dass die erste Kontrolleinheit die Steuersignale des Steuerelementes zusammen mit einem Sicherheitscode in einem Datenpaket anordnet und über die Kommunikationsverbindung an die zweite Kontrolleinheit überträgt und dass die Überwachungseinheit den übertragenen Sicherheitscode mit einem Vergleichscode vergleicht und auf Abweichungen überprüft.

Bevorzugt schaltet die Überwachungseinheit das Gerätesystem in einen sicheren Zustand, wenn der übertragene Sicherheitscode vom Vergleichscode abweicht.

In einer bevorzugten Weiterentwicklung weist das Gerätesystem eine erste Überwachungseinheit, die die Funktionsfähigkeit des Gerätesystems während des Betriebes überwacht, und eine zweite Überwachungseinheit, die die Funktionsfähigkeit des Gerätesystems während des Betriebes überwacht, auf, wobei die erste und zweite Überwachungseinheit redundant aufgebaut sind.

Durch die Verwendung redundanter Systeme kann die Funktionssicherheit erhöht werden. Funktionelle Redundanz zielt darauf ab, sicherheitstechnische Systeme mehrfach parallel auszulegen, damit beim Ausfall einer Komponente die anderen den Dienst gewährleisten. Eine zusätzliche räumliche Trennung der redundanten Systeme kann das Risiko minimieren, dass die Systeme einer gemeinsamen Störung unterliegen. Durch die Verwendung von Komponenten unterschiedlicher Hersteller kann vermieden werden, dass ein systematischer Fehler mehrere redundante Systeme ausfallen lässt (diversitäre Redundanz).

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein erfindungsgemäßes Gerätesystem, das als Wandsägesystem ausgebildet ist, mit einem Werkzeuggerät, einer Fernbedienung und einer Kommunikationsverbindung zwischen dem Werkzeuggerät und der Fernbedienung;
- FIG. 2: das Zusammenwirken zwischen der Fernbedienung und dem Werkzeuggerät in Form eines Blockdiagramms mit einer Überwachungseinheit; und
- FIG. 3: eine Weiterentwicklung mit einer ersten und zweiten Überwachungseinheit.

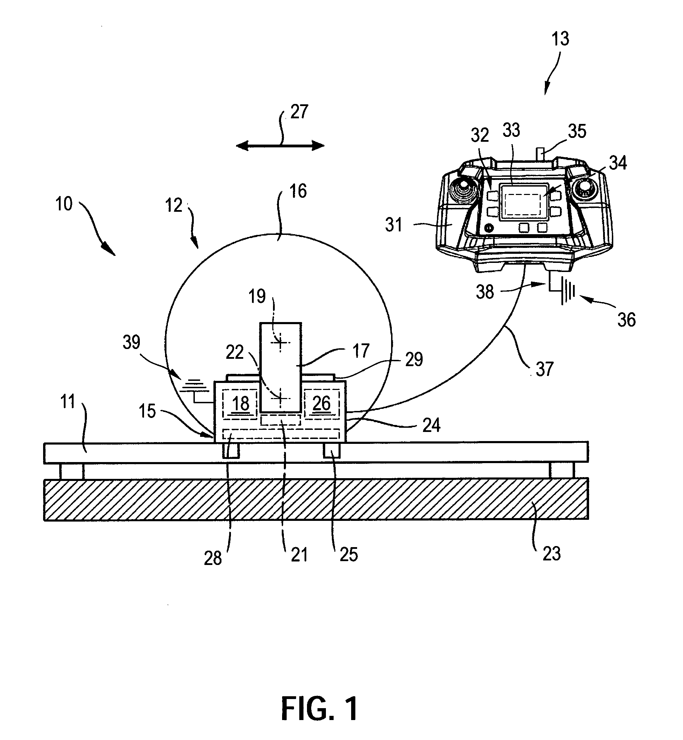

**FIG. 1** zeigt ein erfindungsgemäßes Gerätesystem **10,** das als Wandsägesystem ausgebildet ist. Das Wandsägesystem 10 umfasst eine Führungsschiene **11,** ein an der Führungsschiene 11 verschiebbar angeordnetes Werkzeuggerät **12** und eine Fernbedienung **13.** Das Werkzeuggerät ist als Wandsäge 12 ausgebildet und umfasst eine Bearbeitungseinheit **14** und eine motorische Vorschubeinheit **15.** Die Bearbeitungseinheit ist als Sägekopf 14 ausgebildet und umfasst ein als Sägeblatt ausgebildetes Bearbeitungswerkzeug **16,** das an einem Sägearm **17** befestigt ist und von einem Antriebsmotor **18** um eine Drehachse **19** angetrieben wird.

Zum Schutz des Bedieners kann das Sägeblatt 16 von einem Sägeblattschutz umgeben sein, der mittels eines Blattschutzhalters am Sägearm 17 befestigt wird. Der Sägearm 17 ist von einem Schwenkmotor **21** um eine Schwenkachse **22** schwenkbar ausgebildet. Der Schwenkwinkel des Sägearms 17 bestimmt mit einem Sägeblattdurchmesser des Sägeblattes 16, wie tief das Sägeblatt 16 in ein zu bearbeitendes Werkstück **23** eintaucht. Der Antriebsmotor 18 und der Schwenkmotor 21 sind in einem Gerätegehäuse **24** angeordnet. Die motorische Vorschubeinheit 15 umfasst einen Führungsschlitten **25** und einen Vorschubmotor **26,** der ebenfalls im Gerätegehäuse 24 angeordnet ist. Der Sägekopf 14 ist auf dem Führungsschlitten 25 befestigt und über den Vorschubmotor 26 entlang der Führungsschiene 11 in einer Vorschubrichtung **27** verschiebbar ausgebildet. Im Gerätegehäuse 24 ist neben den Motoren 19, 21, 25 eine Kontrolleinheit **28** zur Steuerung des Sägekopfes 14 und der motorischen Vorschubeinheit 15 angeordnet. Am Gerätegehäuse 24 ist mindestens ein Handgriff **29** vorgesehen.

Die Fernbedienung 13 umfasst ein Gerätegehäuse **31,** eine Eingabeeinrichtung **32,** eine Anzeigeeinrichtung **33** und eine Kontrolleinheit **34,** die im Inneren des Gerätegehäuses 31 angeordnet ist. Die Kontrolleinheit 34 wandelt die Eingaben der Eingabeeinrichtung 32 in Steuersignale und Daten um, die über eine Kommunikationsverbindung an die Wandsäge 12 übermittelt werden. Neben der Eingabeeinrichtung 32 weist die Fernbedienung 13 ein als Not-Aus-Schalter ausgebildetes Steuerelement **35** auf.

Die Kommunikationsverbindung ist als draht- und kabellose Kommunikationsverbindung **36** oder als Kommunikationskabel **37** ausgebildet. Die draht- und kabellose Kommunikationsverbindung ist im Ausführungsbeispiel als Funkverbindung 36 ausgebildet, die zwischen einer ersten Funkeinheit **38** an der Fernbedienung 13 und einer zweiten Funkeinheit **39** am Werkzeuggerät 12 entsteht. Das Kommunikationskabel 37 wird vor allem eingesetzt, wenn eine draht- und kabellose Kommunikation aus Sicherheitsgründen untersagt ist, wie beispielsweise in Krankenhäusern und auf Flughäfen, oder wenn Störquellen die draht- und kabellose Kommunikation behindern.

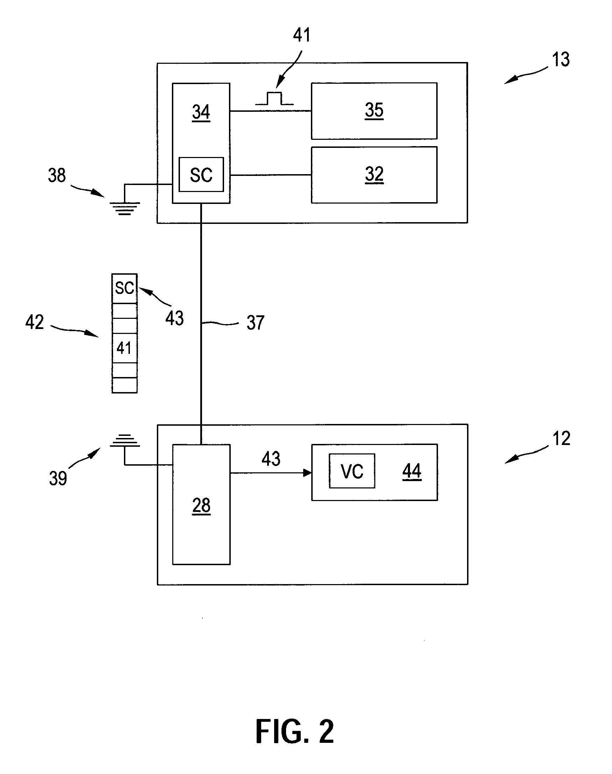

**FIG. 2** zeigt das Zusammenwirken zwischen der Fernbedienung 13 und dem Werkzeuggerät 12 in Form eines Blockdiagramms. Im Ausführungsbeispiel der FIG. 1 ist die Kontrolleinheit 34 der Fernbedienung 13 über die Funkverbindung 36 oder über das Kommunikationskabel 37 mit der Kontrolleinheit 28 des Werkzeuggerätes 12 verbunden. Zur Unterscheidung der Kontrolleinheiten 28, 34 wird die Kontrolleinheit 34 der Fernbedienung 13 im Folgenden als erste Kontrolleinheit 34 und die Kontrolleinheit 28 des Werkzeuggerätes 12 als zweite Kontrolleinheit 28 bezeichnet.

Der Not-Aus-Schalter 35 erzeugt mit einer Frequenz ein Steuersignal **41,** das an die erste Kontrolleinheit 34 übermittelt wird. Das Steuersignal 41 beinhaltet die Information über den logischen Zustand (0 oder 1) des Not-Aus-Schalters 35. Dabei entspricht der Zustand "0" dem nicht-betätigten Not-Aus-Schalter 35 und der Zustand "1" dem betätigten Not-Aus-Schalter 35. Das Gerätesystem 10 kann nur dann sicher betrieben werden, wenn sichergestellt ist, dass das Steuersignal 41 an die zweite Kontrolleinheit 28 übertragen wird.

Um die Funktionsfähigkeit des Gerätesystems 10 zu überprüfen, ist in der ersten Kontrolleinheit 34 ist ein Sicherheitscode **SC** gespeichert, der von der ersten Kontrolleinheit 34 zusammen mit dem Steuersignal 41 des Not-Aus-Schalters 35 sowie Steuersignalen und Daten der Eingabeeinrichtung 32 in einem Datenpaket **42** angeordnet wird. Das Datenpaket 42 wird von der ersten Kontrolleinheit 34 über die Kommunikationsverbindung 36, 37 an die zweite Kontrolleinheit 28 weitergeleitet. Die zweite Kontrolleinheit 28 kennt den Sicherheitscode SC selbst nicht, sie kennt jedoch die Position und Länge des Sicherheitscodes SC im Datenpaket 42 und entnimmt diesen Datenabschnitt **43** mit dem übertragenen Sicherheitscode aus dem Datenpaket 42.

Das Werkzeuggerät 12 weist eine Überwachungseinheit **44** auf, in der ein Vergleichscode **VC** gespeichert ist. Der Vergleichscode VC entspricht dem Sicherheitscode SC, der in der ersten Kontrolleinheit 34 gespeichert ist. Die Überwachungseinheit 44 sendet mit einer voreingestellten Abfragefrequenz **f**ₐ eine Aufforderung an die zweite Kontrolleinheit 28, den Datenabschnitt 43 mit dem übertragenen Sicherheitscode innerhalb einer vorgegebenen Zeitdauer **T** an die Überwachungseinheit 44 zu übermitteln. Nach Ablauf der Zeitdauer T prüft die Überwachungseinheit 44, ob ein Datenabschnitt 43 übertragen wurde. Wenn ein Datenabschnitt 43 übertragen wurde, vergleicht die Überwachungseinheit 44 den Datenabschnitt 43 mit dem Vergleichscode VC. Weicht der Datenabschnitt 43 vom Vergleichscode VC ab, entscheidet die Überwachungseinheit 44, dass die Fernbedienung 13 oder die Kommunikationsverbindung 36, 37 eine Störung aufweist und veranlasst, dass das Werkzeuggerät 12 von der zweiten Kontrolleinheit 28 in einen sicheren Zustand geschaltet wird. Bei Gerätesystemen, wie dem Wandsägesystem 10, mit einem Not-Aus-Schalter kann der sichere Zustand beispielsweise durch eine Unterbrechung der Stromzufuhr zu den Motoren 19, 21, 25 erfolgen.

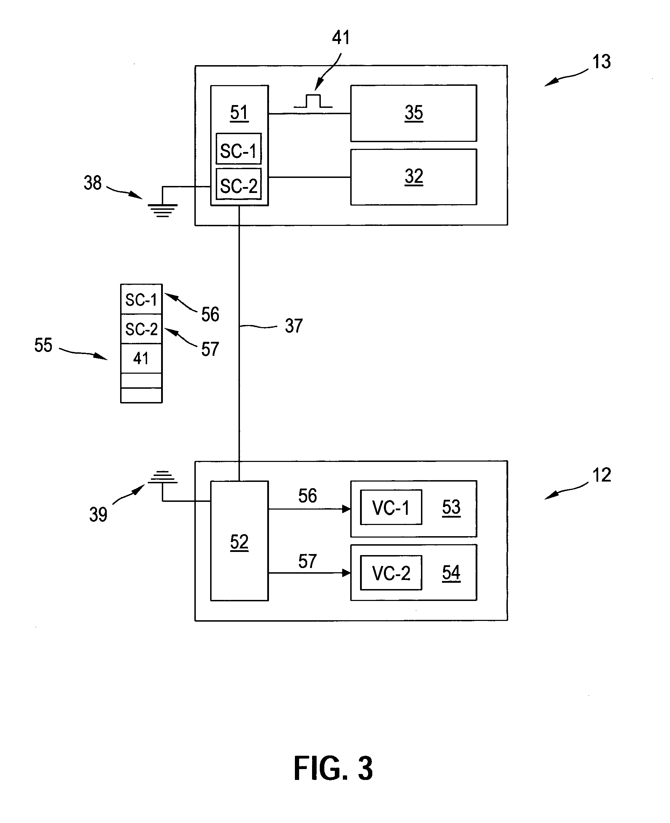

**FIG. 3** zeigt eine Weiterentwicklung eines erfindungsgemäßen Gerätesystems **50,** das wie das Gerätesystem 10 der FIG. 1 als Wandsägesystem ausgebildet ist und die Führungsschiene 11, das Werkzeuggerät 12 und die Fernbedienung 13 umfasst. Das Gerätesystem 50 unterscheidet sich im Aufbau der Kontrolleinheiten des Werkzeuggerätes 12 und der Fernbedienung 13 vom Gerätesystem 10. Die Fernbedienung 13 umfasst eine erste Kontrolleinheit **51** und das Werkzeuggerät 12 eine zweite Kontrolleinheit **52,** die über die draht- und kabellose Kommunikationsverbindung 36 oder das Kommunikationskabel 37 verbindbar sind.

Um die Funktionssicherheit des Gerätesystems 50 während des Betriebs zu erhöhen und bei einer Störung ein Umschalten des Werkzeuggerätes 12 in einen sicheren Zustand zu erreichen, umfasst die zweite Kontrolleinheit 52 eine erste Überwachungseinheit **53** und eine zweite Überwachungseinheit **54,** die redundant aufgebaut sind und unabhängig voneinander arbeiten. Die erste und zweite Überwachungseinheit 53, 54 entsprechen im Aufbau der Überwachungseinheit 44 des Gerätesystems 10 und können die Überwachungseinheit 44 ersetzen. In der ersten Kontrolleinheit 51 sind ein erster Sicherheitscode **SC-1** und ein zweiter Sicherheitscode **SC-2** gespeichert. Über die Länge der Sicherheitscodes SC-1, SC-2, die in der ersten Kontrolleinheit 51 gespeichert werden, kann die Funktionssicherheit des Gerätesystems eingestellt werden; je länger die Sicherheitscodes SC-1, SC-2 sind, umso höher ist die Funktionssicherheit.

Der Not-Aus-Schalter 35 erzeugt mit einer vorgegebenen Frequenz das Steuersignal 41, das an die erste Kontrolleinheit 51 übermittelt wird. Das Steuersignal 41 wird von der ersten Kontrolleinheit 51 zusammen mit dem ersten Sicherheitscode **SC-1** und dem zweiten Sicherheitscode **SC-2** in einem Datenpaket **55** angeordnet, wobei der erste Sicherheitscode SC-1 an einer ersten voreingestellten Position im Datenpaket 55 gespeichert wird und der zweite Sicherheitscode SC-2 an einer zweiten voreingestellten Position. Das Datenpaket 55 wird von der ersten Kontrolleinheit 51 über die Kommunikationsverbindung 36, 37 an die zweite Kontrolleinheit 52 übertragen.

Der erste und zweite Sicherheitscode SC-1, SC-2 sind für die zweite Kontrolleinheit 52 unbekannt. Die zweite Kontrolleinheit 28 kennt die erste Position und Länge des ersten Sicherheitscodes SC-1 im Datenpaket 55 sowie die zweite Position und Länge des zweiten Sicherheitscodes SC-2 im Datenpaket 55. Die entsprechenden Datenabschnitte mit den Sicherheitscodes werden von der zweiten Kontrolleinheit 28 aus dem Datenpaket entnommen und auf Anforderung an die erste und zweite Überwachungseinheit 53, 54 weitergeleitet. Der Datenabschnitt mit dem ersten Sicherheitscode SC-1 wird als erster Datenabschnitt **56** bezeichnet und der Datenabschnitt mit dem zweiten Sicherheitscode SC-2 als zweiter Datenabschnitt **57.**

Die erste Überwachungseinheit 53 übermittelt mit einer ersten Frequenz **f**₁ eine erste Aufforderung an die zweite Kontrolleinheit 28, den ersten Datenabschnitt 56 an die erste Überwachungseinheit 53 weiterzuleiten. Die erste Überwachungseinheit 53 vergleicht den ersten Datenabschnitt 56 mit einem ersten Vergleichscode **VC-1,** der in der ersten Überwachungseinheit 53 gespeichert ist. Wenn der erste Datenabschnitt 56 vom gespeicherten ersten Vergleichscode VC-1 abweicht, veranlasst die erste Überwachungseinheit 53, dass das Werkzeuggerät 12 in einen sicheren Zustand geschaltet wird. Wenn der erste Datenabschnitt 56 mit dem gespeicherten ersten Vergleichscode VC-1 übereinstimmt, prüft die erste Überwachungseinheit 53, ob der erste Sicherheitscode SC-1 innerhalb einer voreingestellten ersten Zeitdauer **T**₁ nach der Aufforderung vollständig an die erste Überwachungseinheit 53 weitergeleitet wurde. Wurde der erste Sicherheitscode SC-1 nicht innerhalb der ersten Zeitdauer **T**₁ nach der Aufforderung vollständig an die erste Überwachungseinheit 53 weitergeleitet, wird das Werkzeuggerät 12 in einen sicheren Zustand geschaltet. Wenn der erste Sicherheitscode SC-1 innerhalb der ersten Zeitdauer **T**₁ vollständig an die erste Überwachungseinheit 53 weitergeleitet wurde, ist die Überprüfung durch die erste Überwachungseinheit 53 abgeschlossen.

Die zweite Überwachungseinheit 54 übermittelt mit einer zweiten Frequenz **f**₂ eine zweite Aufforderung an die zweite Kontrolleinheit 28, den zweiten Datenabschnitt 57 an die zweite Überwachungseinheit 54 weiterzuleiten. Die zweite Überwachungseinheit 54 vergleicht den zweiten Datenabschnitt 57 mit einem zweiten Vergleichscode **VC-2,** der in der zweiten Überwachungseinheit 54 gespeichert ist. Wenn der zweite Datenabschnitt 57 vom gespeicherten zweiten Vergleichscode VC-2 abweicht, veranlasst die zweite Überwachungseinheit 54, dass das Werkzeuggerät 12 in einen sicheren Zustand geschaltet wird. Wenn der zweite Datenabschnitt 57 mit dem zweiten Vergleichscode VC-2 übereinstimmt, prüft die zweite Überwachungseinheit 54, ob der zweite Sicherheitscode SC-2 innerhalb einer voreingestellten zweiten Zeitdauer **T**₂ nach der Aufforderung vollständig an die zweite Überwachungseinheit 54 weitergeleitet wurde. Wurde der zweite Sicherheitscode SC-2 nicht innerhalb der zweiten Zeitdauer **T**₂ vollständig an die zweite Überwachungseinheit 54 weitergeleitet, wird das Werkzeuggerät 12 in einen sicheren Zustand geschaltet. Wenn der zweite Sicherheitscode SC-2 innerhalb der zweiten Zeitdauer **T**₂ vollständig an die zweite Überwachungseinheit 54 weitergeleitet wurde, ist die Überprüfung durch die zweite Überwachungseinheit 54 abgeschlossen.

## Patentansprüche

1. Verfahren zur Überwachung der Funktionsfähigkeit eines Gerätesystems (10; 50) mit einem Werkzeuggerät (12) und einer Fernbedienung (13) während des Betriebes, mit den Schritten:
▪ ein sicherheitsrelevantes Steuersignal (41) wird von einem Steuerelement (35) der Fernbedienung (13) an eine erste Kontrolleinheit (34; 51) der Fernbedienung (13) gesandt,
▪ das Steuersignal (41) wird von der ersten Kontrolleinheit (34; 51) zusammen mit einem Sicherheitscode (SC; SC-1, SC-2) in einem Datenpaket (42; 55) angeordnet und über eine Kommunikationsverbindung (36, 37) von der ersten Kontrolleinheit (34; 51) an eine zweite Kontrolleinheit (28; 52) des Werkzeuggerätes (12) übertragen,
▪ der übertragene Sicherheitscode (43; 56, 57) wird von der zweiten Kontrolleinheit (28; 52) aus dem Datenpaket (42; 55) entnommen und auf Aufforderung einer Überwachungseinheit (44; 53, 54) an die Überwachungseinheit (44; 53, 54) weitergeleitet,
▪ der übertragene Sicherheitscode (43; 56, 57) wird von der Überwachungseinheit (44; 53, 54) mit einem Vergleichscode (VC; VC-1, VC-2) verglichen und
▪ das Werkzeuggerät (12) wird von der Überwachungseinheit (44; 53, 54) in einen sicheren Zustand geschaltet, wenn der übertragene Sicherheitscode (43; 56, 57) vom Vergleichscode (VC; VC-1, VC-2) abweicht.

2. Verfahren nach Anspruch 1, **dadurch gekennzeichnet, dass** von der Überwachungseinheit (44; 53, 54) mit einer voreingestellten Frequenz (f; f₁, f₂) eine Aufforderung an die zweite Kontrolleinheit (28; 52) übermittelt wird, den übertragenen Sicherheitscode (43; 56, 57) an die Überwachungseinheit (44; 53, 54) weiterzuleiten.

3. Verfahren nach Anspruch 2, **dadurch gekennzeichnet, dass** das Werkzeuggerät (12) von der Überwachungseinheit (44; 53, 54) in einen sicheren Zustand geschaltet wird, wenn der übertragene Sicherheitscode (SC) nicht innerhalb einer voreingestellten Zeitdauer (T) nach der Aufforderung vollständig an die Überwachungseinheit (44; 53, 54) weitergeleitet wurde.

4. Verfahren nach Anspruch 1, **dadurch gekennzeichnet, dass** die Steuersignale von der ersten Kontrolleinheit (51) zusammen mit einem ersten Sicherheitscode (SC-1) und einem zweiten Sicherheitscode (SC-2) im Datenpaket (55) angeordnet und über die Kommunikationsverbindung (36, 37) an die zweite Kontrolleinheit (52) übertragen werden.

5. Verfahren nach Anspruch 4, **dadurch gekennzeichnet, dass** die übertragenen ersten und zweiten Sicherheitscodes (56, 57) von der zweiten Kontrolleinheit (52) aus dem Datenpaket (55) entnommen werden und der übertragene erste Sicherheitscode (56) auf Aufforderung einer ersten Überwachungseinheit (53) an die erste Überwachungseinheit (53) und der übertragene zweite Sicherheitscode (57) auf Anforderung einer zweiten Überwachungseinheit (54) an die zweite Überwachungseinheit (54) weitergeleitet werden.

6. Verfahren nach Anspruch 5, **dadurch gekennzeichnet, dass** der übertragene erste Sicherheitscode (56) von der ersten Überwachungseinheit (53) mit einem ersten Vergleichscode (VC-1) verglichen wird und der übertragene zweite Sicherheitscode (57) von der zweiten Überwachungseinheit (54) mit einem zweiten Vergleichscode (VC-2) verglichen wird.

7. Verfahren nach Anspruch 6, **dadurch gekennzeichnet, dass** das Werkzeuggerät (12) von der ersten und/oder zweiten Überwachungseinheit (53, 54) in einen sicheren Zustand geschaltet wird, wenn der übertragene erste Sicherheitscode (56) vom ersten Vergleichscode (VC-1) abweicht und/oder der übertragene zweite Sicherheitscode (57) vom zweiten Vergleichscode (VC-2) abweichen.

8. Verfahren nach einem der Ansprüche 5 bis 7, **dadurch gekennzeichnet, dass** die erste Überwachungseinheit (53) mit einer ersten Frequenz (f₁) eine erste Aufforderung an die zweite Kontrolleinheit (52) übermittelt, den übertragenen ersten Sicherheitscode (56) an die erste Überwachungseinheit (53) weiterzuleiten, und die zweite Überwachungseinheit (54) mit einer zweiten Frequenz (f₂) eine zweite Aufforderung an die zweite Kontrolleinheit (52) übermittelt, den übertragenen zweiten Sicherheitscode (57) an die zweite Überwachungseinheit (54) weiterzuleiten.

9. Verfahren nach Anspruch 8, **dadurch gekennzeichnet, dass** das Werkzeuggerät (12) von der ersten und/oder zweiten Überwachungseinheit (53, 54) in einen sicheren Zustand geschaltet wird, wenn der übertragene erste Sicherheitscode (56) nicht innerhalb einer voreingestellten ersten Zeitdauer (T₁) nach der Aufforderung vollständig an die erste Überwachungseinheit (53) weitergeleitet wurde und/oder der übertragene zweite Sicherheitscode (57) nicht innerhalb einer voreingestellten zweiten Zeitdauer (T₂) nach der Aufforderung vollständig an die zweite Überwachungseinheit (54) weitergeleitet wurde.

10. Gerätesystem (10; 50) zur Durchführung eines Verfahrens nach einem der Ansprüche 1 bis 9, aufweisend:
▪ eine Fernbedienung (13) mit einem sicherheitsrelevanten Steuerelement (35), einer Eingabeeinrichtung (32) und einer ersten Kontrolleinheit (34; 51), die die Eingaben der Eingabeeinrichtung (32) in Steuersignale und Daten umwandelt,
▪ ein Werkzeuggerät (12) mit einem Bearbeitungswerkzeug (16), einem Antriebsmotor (18), der das Bearbeitungswerkzeug (16) antreibt, und einer zweiten Kontrolleinheit (28; 52), die das Werkzeuggerät (12) steuert,
▪ eine Kommunikationsverbindung (36, 37), über die die erste Kontrolleinheit (34; 51) der Fernbedienung (13) mit der zweiten Kontrolleinheit (28; 52) des Werkzeuggerätes (12) verbindbar ist, und
▪ eine Überwachungseinheit (44; 53, 54), die die Funktionsfähigkeit des Gerätesystems (10; 50) während des Betriebes überwacht,
**dadurch gekennzeichnet, dass** die erste Kontrolleinheit (34; 51) das Steuersignal (41) des sicherheitsrelevanten Steuerelementes (35) zusammen mit einem Sicherheitscode (SC; SC-1, SC-2) in einem Datenpaket (42, 55) anordnet und über die Kommunikationsverbindung (36, 37) an die zweite Kontrolleinheit (28; 52) überträgt und dass die Überwachungseinheit (44; 53, 54) den übertragenen Sicherheitscode (43; 56, 57) mit einem Vergleichscode (VC; VC-1, VC-2) vergleicht und auf Abweichungen überprüft.

11. Gerätesystem nach Anspruch 10, **dadurch gekennzeichnet, dass** die Überwachungseinheit das Gerätesystem (10; 50) in einen sicheren Zustand schaltet, wenn der übertragene Sicherheitscode (43; 56, 57) vom Vergleichscode (VC; VC-1, VC-2) abweicht.

12. Gerätesystem nach einem der Ansprüche 10 bis 11, **dadurch gekennzeichnet, dass** das Gerätesystem (50) eine erste Überwachungseinheit (53), die die Funktionsfähigkeit des Gerätesystems (50) während des Betriebes überwacht, und eine zweite Überwachungseinheit (54), die die Funktionsfähigkeit des Gerätesystems (50) während des Betriebes überwacht, aufweist, wobei die erste und zweite Überwachungseinheit (53, 54) redundant aufgebaut sind.
